# EUROPEAN PATENT APPLICATION

(11) **EP 1 457 468 A1**
(43) Date of publication of application: **15.09.2004**
(21) Application number: 04000016.8
(22) Date of filing: 02.01.2004
(51) Int. Cl.: C03C 25/50

(54) **Fiber optic cable comprising a core surrounded by coating having a radially-varying elastic modulus**

(30) Priority: 10.03.2003 US 384849
(71) Applicant: FITEL USA CORPORATION (a Delaware Corporation), Norcross, Georgia 30071 (US)
(72) Inventor: Konstadinidis, Kariofilis, Decatur, Georgia 30033 (US); Oh, Kyoyul, Lake Orion, Michigan 48359 (US); Tabaddor, Mahmood, Alpharetta, Georgia 30022 (US); Turnipseed, John M., Lilburn, Georgia 30047 (US)
(74) Representative: Schoppe, Fritz, Dipl.-Ing.

(57) **Abstract**

An improved optical fiber cable is fabricated from a core surrounded by a protective sheath having a radially-varying elastic modulus. The core comprises one or more longitudinally extending optical fibers. The protective sheath comprises least a first coating layer portion and a second coating layer portion. The first and second coating layer portions are comprised of a common coating material. A modifier is added to the coating material comprising the first coating layer portion. Likewise, a modifier is added to the coating material comprising the second coating layer portion. The addition of a modifier to the first coating layer portion and the addition of a modifier to the second coating layer portion cause the coating to have an elastic modulus that varies in a radial direction along radii extending outwardly from a center of the core of the cable. The core may be, for example, a single optical fiber, a bundle of optical fibers, an optical fiber ribbon, a stack of optical fiber ribbons, etc.

## Description

### TECHNICAL FIELD OF THE INVENTION

The present invention is generally related to the field of fiber optics and, more particularly, to a fiber optic cable comprising a core surrounded by a protective sheath and a method for making the same.

### BACKGROUND OF THE INVENTION

Optical fiber used in communications systems typically includes a glass central light-carrying region surrounded by a cladding that is also formed from glass. The glass cladding and the glass central light-carrying region have different optical properties. Typically, one or more protective coating layers surround the central light carrying region and cladding. Such fibers can be made by drawing a thin strand from a heated, partially molten glass preform having the proper composition to cause the cladding surrounding the central light-carrying region to have the proper composition. As a strand of soft, molten glass is pulled from the preform, both the glass of the central light-carrying region and the cladding glass stretch. During this process, the central light-carrying region remains in the middle of the fiber and the cladding remains on the outside, thus forming the composite central light-carrying region and cladding structure of the finished fiber. As the fiber is pulled away from the preform, it cools and solidifies, and the coating is applied. These processes normally are performed at high speeds so that the fiber is drawn at high rates.

In optical fiber communications systems, light injected into one end of the fiber is pulsed, or progressively varied, in accordance with information to be transmitted over the system. The speed at which light propagates along a fiber depends upon many factors, including the optical properties of the materials that make up the central light-carrying region and cladding and the diameter of the central light-carrying region. Light passing along the fiber typically includes portions of light having different polarizations, i.e., different orientations of the electromagnetic waves constituting the light. If the fiber central light-carrying region is not perfectly cylindrical, but instead has long and short diameters, light of one polarization will have its electrical waves aligned with a long diameter of the central light-carrying region whereas light of another polarization will have its electrical waves aligned with the short diameter of the central light-carrying region. In this case, the effective diameter of the fiber central light-carrying region will be different for light of one polarization than for light of another polarization. Portions of light having different polarizations will travel at different velocities. In addition to this geometrical effect, differential thermal expansion between the central light-carrying region and cladding gives rise to stress induced birefringence, which also increases the difference between propagation velocities of light of different polarizations. Stated another way, the fiber has a "slow" axis in one direction perpendicular to its length, and a "fast" axis in the other direction perpendicular to its length.

Light having a direction of polarization aligned with the fast axis travels more rapidly than light having a direction of polarization aligned with the slow axis. As a result, the two polarization modes propagate with different propagation constants. The difference between the propagation constants is termed birefringence, and the magnitude of the birefringence is given by the difference between the propagation constants of the two orthogonal modes. Birefringence causes the polarization state of light propagating in the fiber to evolve periodically along the length of the fiber. The distance required for the polarization to return to its original state is typically referred to as the fiber beat length, which is inversely proportional to the fiber birefringence. Accordingly, fibers with more birefringence have shorter beat lengths, and vice versa.

In addition to causing periodic changes in the polarization state of light traveling in a fiber, the presence of birefringence means that the two polarization modes travel at different group velocities, with the difference increasing as the birefringence increases. The differential time delay between the two polarization modes is called polarization mode dispersion, or PMD. Imperfections in the fiber other than differences in the diameter of the light-carrying region can also contribute to PMD. PMD distorts the light pulses or waves transmitted along the fiber, thus reducing the signal quality and limiting the rate at which information can be passed along the fiber. PMD is very harmful to signal quality for high bit-rate systems and analog communication systems. One way to reduce the effects of PMD is to continually re-orient the fast and slow axes of the fiber. This can be accomplished by spinning the fiber as it is drawn so that the slow axis and the fast axis of the fiber are repeatedly interchanged along the length of the fiber.

There is a need for fiber optic products (e.g., optical fibers, fiber optic ribbons, fiber optic bundles, fiber optic cables and air-blown fiber optic products) that communicate information at high bit rates and at high frequencies over great distances. Communication of information at high bit rates and high frequencies over great distances generally requires high-power transmission. However, high-power transmission generally results in an increase in sensitivity of the fiber optic products, which can result in additional negative effects on signal quality.

Manufacturers of next-generation optical fibers that are designed for use in high bit-rate transmission at high frequencies over great distances have seen indications that these optical fibers are very sensitive to extrinsic loading and environmental conditions. These optical fibers are designed to have larger effective areas in order to handle the higher power density requirements that need to be met for transmission over the many channels of current wavelength division multiplexing (WDM) transmission systems at high bit rates over great distances. These large-effective area or super large-effective area fibers are very sensitive to certain transmission properties, including microbend loss. In addition, extrinsic loading (e.g., bending of the fiber) and certain environmental conditions also increase PMD, which, as stated above, limits high bit-rate transmission.

It is known to protect optical fibers and arrays of optical fibers (e.g., optical fiber ribbons, cables containing multiple optical fibers, etc.) from adverse environmental conditions and microbending by coating individual fibers and arrays of fibers with one or more coating layers. For example, it is known to coat a glass fiber with a soft buffer coating layer that is adjacent the glass outer cladding of the fiber and then with an outer coating layer that surrounds the soft inner coating layer and is thicker than the buffer coating layer. The buffer layer normally comprises a material having a relatively low elastic modulus so that it is soft and cushions the fiber and prevents microbending loss, whereas the outer layer normally comprises a material having a relatively high elastic modulus to protect the coated fiber from the environment.

For example, Cain, et al., U.S. Patent No. 5,062,685, discloses coating an optical fiber or plurality of optical fibers with a soft buffer coating layer comprising a polymer having a low glass transition temperature, Tg, and having a thickness sufficient to prevent harmful microbending, and an outer, textured coating layer that surrounds the soft, buffer coating layer. The outer, textured coating layer is comprised of a material that has sufficient strength to prevent a fiber or group of fibers from being damaged during blown optical fiber applications that are used to push the fiber or group of fibers through a duct. This technique is performed by forcing a gas, such as air, through a duct in order to effectuate a viscous fluid drag that propels the fiber or fibers through the duct. It is used in situations where fibers or fiber cables are small and/or light to, and the ducts are significantly close in size to the fiber or fiber cable, that pulling them through the duct, as opposed to blowing them through the duct, might cause a tensile strength to be exerted on the fibers of fiber cables that could break or otherwise damage them.

Another example of a multiple-coated fiber or group of fibers is disclosed in Cochinni et al., U.S. Patent No. 6,327,876. Cochinni, et al. discloses an apparatus and method for applying the soft, inner buffer coating and the harder outer coating in such a way that the coating concentricity (i.e., the ratio between the minimum and maximum thickness of a given coating layer) of each coating layer is improved, which, in turn, reduces PMD. To accomplish this, Cochinni, et al. discloses rotating the first and/or second die contained in the first and second applicators, respectively, as the fiber is pulled through the openings in the die and the respective coating layers are applied during the draw process. Cochinni, et al. purports that by rotating a rotatable die during application of a coating layer, the need to spin the fiber as it is being drawn in order to reduce PMD is eliminated.

One disadvantage of the known techniques for applying the coating layers is that different materials are used for the coatings because the coatings have different properties for various reasons. For example, the inner coating should be a soft coating for cushioning the glass fiber, but should also have a sufficient relative low elastic modulus to prevent harmful microbending. On the other hand, the outer coating should be a harder coating, and thus should have a relatively high elastic modulus. Also, depending on the application, the outer coating may have other protective characteristics to protect the fiber from the environment (e.g., textured as disclosed in Cain, et al.). Because the coating layer materials are different, known techniques and systems for applying the different coating layers utilize separate applicators (i.e., an applicator for each layer to be applied) and separate coating application steps.

The requirements associated with utilizing multiple applicators and multiple materials increase system costs and reduce the throughput of the manufacturing line. It would be desirable to provide a method and apparatus for manufacturing optical fiber products wherein a single material and/or a single applicator may be used to apply multiple coating layers. Such optical products include, for example, individual optical fibers, optical fiber cables in which multiple optical fibers are bundled together, and optical fiber ribbons in which optical fibers are arranged in a side-by-side configuration in one or more rows.

### SUMMARY OF THE INVENTION

The present invention provides an optical fiber cable that includes a core comprising one or more optical fibers surrounded by a protective sheath, which has a radially-varying elastic modulus, and a method for making the same. The protective sheath includes first and second coating layer portions, which include a common coating material. A modifier is added to the coating material comprising the first coating layer portion. Likewise, a modifier is added to the coating material comprising the second coating layer portion. The addition of a modifier to the first coating layer portion and the addition of a modifier to the second coating layer portion cause the coating to have an elastic modulus that varies in a radial direction along radii extending outwardly from a center of the core of the cable. The core may be, for example, a single optical fiber, a bundle of optical fibers, an optical fiber ribbon, a stack of optical fiber ribbons, etc. The protective sheath has an elastic modulus that varies outwardly along radii from the center of the core.

The apparatus of the present invention comprises a coating applicator that is configured to apply a coating that has a radially-varying elastic modulus to the aforementioned core. The method of the present invention comprises applying a coating having a radially-varying elastic modulus to the core. The manner in which the method is performed may vary depending on the configuration of the apparatus of the present invention. For example, in the case of an optical fiber bundle, the coating having a radially-varying elastic modulus is applied in a process that is separate from the process used to manufacture the optical fibers of the cable, and which is performed subsequent to the optical fiber manufacturing process. In the case of an optical fiber ribbon or a stack of optical fiber ribbons, the coating having a radially-varying elastic modulus is applied in a process that is separate from the process used to manufacture the ribbon(s), and which is performed subsequent to the ribbon-making process. In other words, with respect to an optical fiber bundle or ribbon, the fibers are manufactured first, and then the coating having a radially-varying elastic modulus is subsequently applied to the multiplicity of optical fibers that are included in the bundle or ribbon.

Preferably, the radially-varying elastic modulus of the coating is a single polymeric material that gradually increases in the direction extending radially outwardly from the center of the core from a relatively low elastic modulus to a relatively high elastic modulus, and vice versa. To accomplish this, preferably different amounts of a particular additive are added to different respective streams of a common polymeric material in a single applicator. The streams are then applied to the core in such a way that the streams combine to form a single coating having a radially-varying elastic modulus.

These and other features and advantages of the present invention will become apparent from the following description, drawings and claims.

### BRIEF DESCRIPTION OF THE DRAWINGS

Many principles and features of the fiber optic communications media of the present invention and methods for making the same can be better understood with reference to the following drawings. The components in the drawings are not necessarily to scale, emphasis instead being placed upon clearly illustrating the principles and concepts of the present invention. Moreover, in the drawings, like reference numerals designate corresponding parts throughout the several views.

FIGS. 1 and 2 show an end view and a perspective view, respectfully, of an example embodiment of a fiber optic cable of the invention comprising a coating having radially-varying elastic modulus, wherein the cable is an individual optical fiber.

FIGS. 3 and 4 show an end view and a perspective view, respectfully, of an example embodiment of a fiber optic cable of the invention comprising a coating having a radially-varying elastic modulus, wherein the media is an optical fiber cable comprising a bundle of optical fibers, such as the fibers of the present invention shown in FIGS. 1 and 2, for example.

FIGS. 5 and 6 show an end view and a perspective view, respectfully, of an embodiment of a fiber optic cable of the invention comprising a coating having a radially-varying elastic modulus, the media being an optical fiber ribbon comprising a row of optical fibers, such as the fibers of the present invention shown in FIGS. 1 and 2, for example.

FIGS. 7 and 8 show an end view and a perspective view, respectfully, of an embodiment of a fiber optic cable of the invention comprising a coating having a radially-varying elastic modulus, the media being an optical fiber ribbon comprising a multiple parallel rows of optical fibers, such as the fibers of the present invention shown in FIGS. 1 and 2, for example.

FIG. 9A shows a plan view of an example embodiment of the apparatus of the present invention configured for manufacturing the optical fiber cable of FIGS. 1 and 2.

FIG. 9B shows a plan view of another example embodiment of the apparatus of present invention configured for manufacturing the optical fiber cable of the present invention.

FIG. 9C shows a plan view of yet another example embodiment of the apparatus of present invention configured for manufacturing the optical fiber cable of the present invention.

### DETAILED DESCRIPTION OF THE PREFERRED EMBODIMENTS

Examples of optical fiber communications media of the present invention include, but are not limited to, optical fibers, such as single-mode fibers and multi-mode fibers, fiber optic ribbons, fiber optic bundles, fiber optic cables and air-blown fiber optic products. The manner and extent of radial variation of the elastic modulus of the coating of the optical fiber communications media of the present invention depend on a variety of factors, such as, for example, the purpose for which the product is designed. If, for example, the fiber optic products are to be protected from stress-induced bending or other extrinsic loading, the elastic modulus of the coatings that are varied may be those that enable the coatings to provide maximum protection and cushioning effect to maintain concentricity. If, for example, the coating is to provide protection from physical hazards, environmental hazards or damage, etc., the elastic modulus of the coating will be varied accordingly.

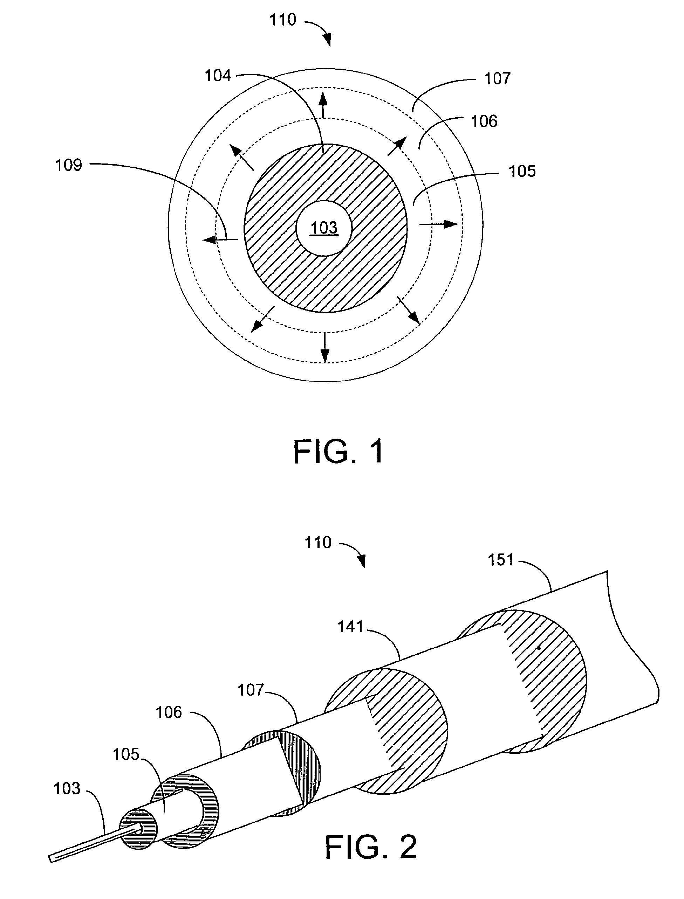

FIG. 1 shows a cross-sectional end view of an optical fiber 110 having a radially-varying elastic modulus. FIG. 2 shows a perspective view of the fiber 110. As shown in FIG. 1, the optical fiber 110 comprises at least a central light-carrying region 103, a cladding 104, and a coating represented by numerals 105, 106 and 107 that has a elastic modulus that vary radially. The central light-carrying region 103 and the cladding 104 are adjacent to each other. It will be understood by those skilled in the art that an optical fiber may have one or more other annular regions (not shown) between the central light-carrying region 103 and the cladding region 104 for the purpose of, for example, providing the fiber with a particular refractive index profile for dispersion compensation. For ease of illustration and explanation, no other annular regions are shown in FIG. 1 between the central light-carrying region 103 and the cladding region 104.

The central light-carrying region 103 and the cladding 104 are typically made of silica-glass. In accordance with the invention, the coating layer 105/106/107 is represented by dotted areas, with the number of dots increasing radially in the direction extending outwards from the central light-carrying region 103, i.e., in the direction indicated by arrows 109. The gradual increasing density of the dots representing the coating layer 105/106/107 may indicate, for example, that the elastic modulus of the coating 105/106/107 gradually increases from a relatively low elastic modulus in region 105 of the coating to a relatively high elastic modulus in region 107 of the coating. In this example, the relative elastic modulus of the coating region 106 would be somewhere in between that of region 105 and that of region 107. In this example, the radially-varying elastic modulus varies gradually. As stated above, the present invention is not limited to a gradual radial variation in elastic modulus. The radial variation could be, for example, a step-wise function such that the radial variation would change abruptly at some location within the coating. For ease of explanation, the present invention is described and illustrated herein only with reference to a coating layer that either increases gradually or decreases gradually in the radial direction away from the center of the central light-carrying region 103.

The coating layer 105/106/107 can be viewed as a single coating layer having multiple portions that have different elastic modulus, or as multiple separate coating layers comprised of a single material that has been modified to have a radially-varying elastic modulus. For ease of explanation, the fiber optic cable discussed herein will be discussed as having a single coating with a radially-varying elastic modulus.

As discussed in detail below, preferably a single applicator is used to apply the coatings by having multiple coating streams of the same material flow into the single applicator from different locations in the applicator and by adding different modifiers, or different amounts of the same modifier, to each individual stream. In either case, the coating material is the same, but the modifier, or the amount of the modifier added to the respective streams in the applicator, is different. The result is that the coating will have a radially-varying elastic modulus. This obviates the need to employ a separate applicator in order to apply different coating layers.

As shown in FIG. 2, the optical fiber 110 may comprise an additional coating 141 that surrounds the outer portion 107 of the coating 105/106/107. The optical fiber 110 may further comprise a color layer 151, such as ink, for example, which surrounds coating layer 141. In yet another alternative embodiment, the coating 141 may be a coating having a radially-varying elastic modulus, such as coating layer 105/106/107, for example. The locations of various coating layers may also be swapped in some cases, as will be understood by those skilled in the art in view of the present disclosure.

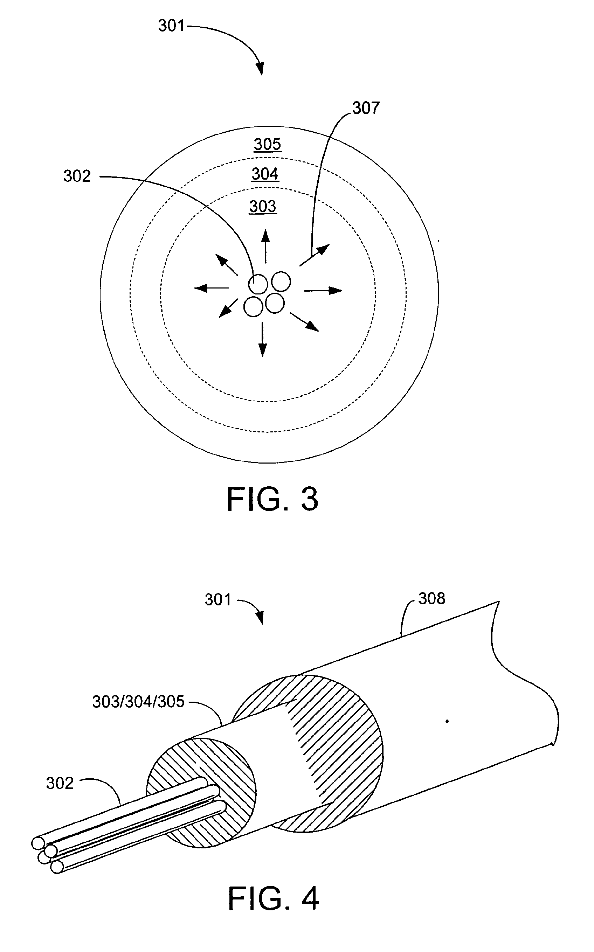

FIG. 3 shows a cross-sectional end view of a fiber optic bundle 301 in accordance with another example embodiment of the present invention, which comprises 4 optical fibers 302 and which is surrounded by a coating having a radially-varying elastic modulus. The coating is represented by numerals 303, 304 and 305, which, in turn, represent regions of relatively low elastic modulus, of relatively medium elastic modulus and of relatively high elastic modulus, respectively. Alternatively numerals 303, 304 and 305 could represent regions of relatively high elastic modulus, of relatively medium elastic modulus and of relatively low elastic modulus, respectively. In other words, the relative elastic modulus could either increase or decrease in the direction extending radially outward from the center of the fiber optic bundle 301 in the directions indicated by arrows 307. As in FIG. 1, the difference between the numbers of dots in each of the regions 303, 304 and 305 is intended to indicate that the elastic modulus of the regions vary from one region to another of the coating 303/304/305.

Only four modified optical fibers 302 are shown for simplicity. However, the fiber optic bundle 301 may comprise a higher or a lower number of optical fibers. The optical fibers 302 may be optical fibers of the type shown in FIG. 1 or may be well known optical fibers of the type that have an inner, soft buffer coating and an outer, harder coating (i.e., conventional optical fibers). FIG. 4 is a perspective, cross-sectional view of the bundle 301. The coating 303/304/305 may be surrounded by an additional coating or sheath 308.

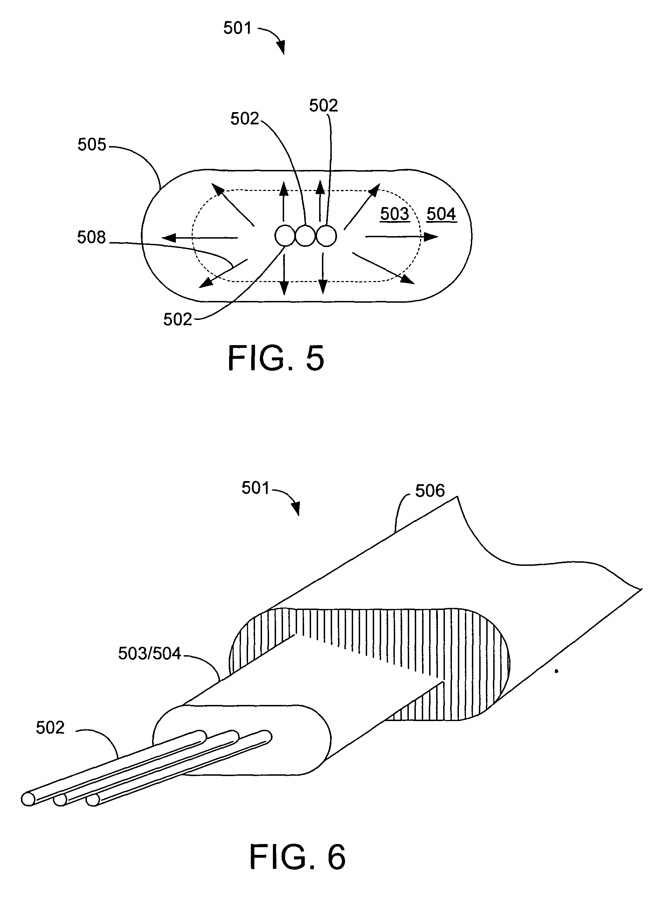

FIG. 5 shows a cross-sectional end view an optical fiber ribbon 501 comprising a coating layer, or matrix, having a radially-varying elastic modulus. The ribbon 501 coating, which is represented by regions 503 and 504, surrounds three optical fibers 502 in this example, which may be of the type shown in FIG. 1 or of one of the aforementioned conventional fibers. The coating regions 503 and 504 are each illustrated as having different densities of dots to indicate that the elastic modulus of the coating 503/504 is radially varying. It should be noted that the fiber optic ribbon 501 may comprise any number of optical fibers (e.g., 12 fibers, 24 fibers, etc). Also, the ribbon 501 may comprise multiple rows (not shown) of fibers.

The term radially-varying elastic modulus, as that term is used herein in connection with a ribbon of the type shown in FIG. 5, means that the elastic modulus vary in directions outwardly extending from the row of fibers 502 toward the outer edge 505 of the coating 503/504 in the directions indicated by the arrows 508. FIG. 6 is a cross-sectional perspective view of the ribbon 501 shown in FIG. 5 with an additional coating 506 that surrounding the coating layer 503/504 in accordance with this example embodiment.

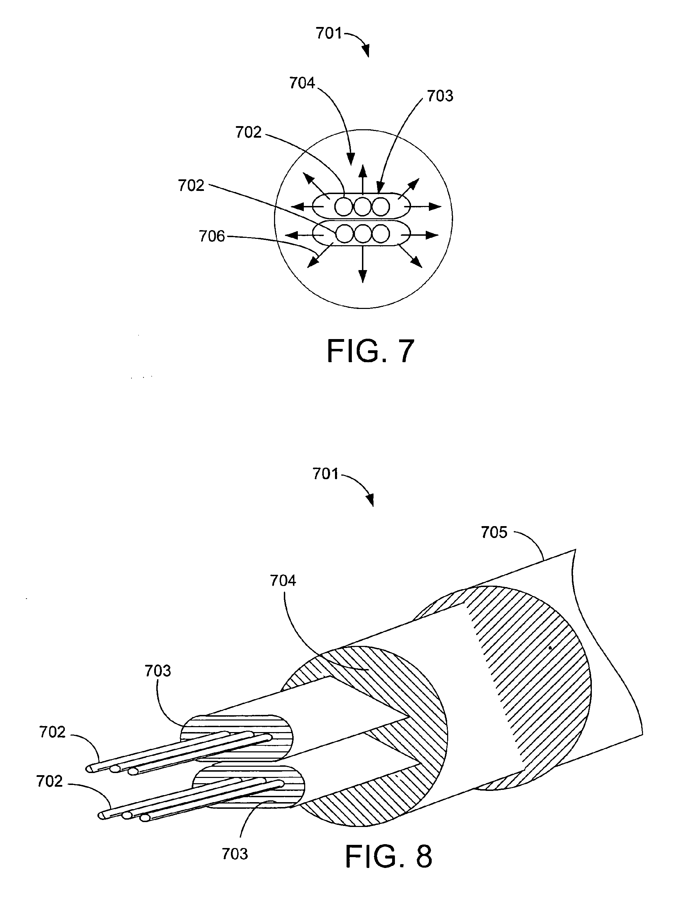

FIG. 7 shows a cross-sectional end view of an optical fiber cable 701 that comprises multiple optical fiber ribbons, which may be ribbons of the type shown in FIG. 5 or, alternatively, a conventional or known type of ribbon. Each ribbon is comprised of three fibers 702, which are all surrounded by a coating comprising coating portions 703 and 704. The coating 703/704 has an elastic modulus that varies radially, i.e., in the directions of arrows 706. FIG. 8 is a cross-sectional perspective view of the cable 701 shown in FIG. 7 with an additional coating or sheath 705 surrounding the coating 703/704.

Each of the fibers 702 may be of the type shown in Fig. 1, or alternatively, may be a conventional or known type of fiber. Although only two ribbons are shown for simplicity, it should be noted that the optical fiber cable 701 may have a different number of fiber optic ribbons. For simplicity, only three optical fibers 702 are shown in each ribbon. However, ribbon may comprise a higher or lower number of optical fibers.

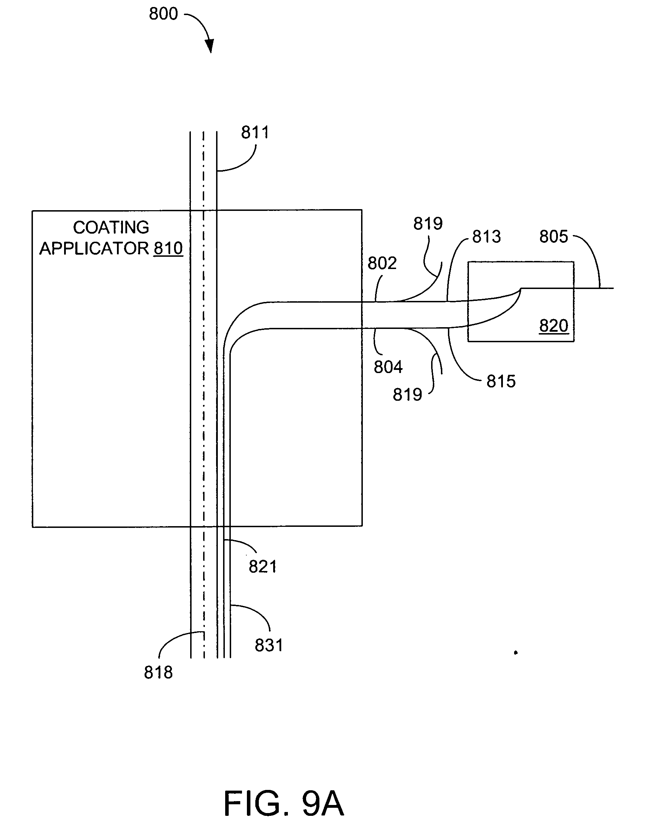

FIG. 9A is a block diagram of the apparatus 800 of the present invention in accordance with an example embodiment. The apparatus 800 is configured to provide an optical fiber, such as optical fiber 110 shown in FIGS. 1 and 2, with a coating having a radially-varying elastic modulus. The apparatus 800 comprises an applicator 810 that applies the coating material of the present invention as an optical fiber 811 comprising a central light-carrying region and a cladding passes through the applicator 810. The apparatus 800 includes a coating divider 820 that divides a coating material 805 into at least two streams 813 and 815. It should be noted that although only two streams are shown, the coating divider 810 may be configured to divide the coating material 805 into more than two streams.

The streams 813 and 814 comprise mixtures 802 and 804, respectively, that are comprised of a common material, but have different elastic modulus due to the addition of different amounts of a modifier 819 to each of the streams 813 and 815. The mixtures 802 and 804 are deposited on the optical fiber 811 in the coating applicator 810 along a longitudinal axis 818 of the optical fiber 811. The mixture 802 is deposited adjacent to the optical fiber 811 to form the coating layer portion 821 of the optical fiber 811. The mixture 804 is deposited adjacent to the coating layer portion 821 to form the coating layer portion 831. After curing the coating in, for example, an ultraviolet light (UV) curing oven (not shown), the coated optical fiber 811 has a radially-varying elastic modulus due to the differences between the elastic modulus of the coating layer portions 821 and 831.

The elastic modulus of the coating layer portion 821 can be made different from the elastic modulus of the coating layer portion 831 by, for example, introducing different amounts of the modifier 819 into the streams 813 and 815. Alternatively, the elastic modulus of the layer 821 can be made different from elastic modulus of the layer 831 by introducing different types of modifiers into the streams 813 and 815. The elastic modulus of the layer 821 can also be made different from the elastic modulus of the layer 831 by, for example, introducing different amounts of different types of modifiers into the streams 813 and 815. Different amounts of a modifier 819 are introduced into the streams 813 and 815 to form mixtures 802 and 804. For example, a first weight ratio of the modifier 819 may be introduced into the stream 813 to form the mixture 802 and a second weight ratio of the modifier 819 may be introduced into the stream 815 to form the mixture 804. The first weight ratio is unequal to the second weight ratio. An example of a range of the first and second weight ratios is 1 to 10%.

Examples of different types of coating materials include ultraviolet-curable (UV-curable) coatings, such as, 950-106, manufactured by DSM Desotech™ Incorporated and 9MKU70134, manufactured by Borden Chemical™ Incorporated. Additional examples of coatings include UV-curable coatings, such as, 950-108, manufactured by DSM-Desotech Incorporated and 9MKU70135, manufactured by Borden Chemical™ Incorporated.

Different types of modifiers that can be used for this purpose include, but are not limited to, fillers, cross-linking agents, polymerization chain transfer agents, photoinitiators, and any combination thereof. Examples of fillers include nanoclays, silica particles, alumina particles, carbon black, glass fibers and pulverized polymeric solids. Nanoclays can have various platelet types, such as, needles, plates and spherical particles. Additional examples of nanoclays include minerals selected from a group consisting of montmorillonite, hectorite and bentonite. Further examples of nanoclays include silicates selected from a group consisting of aluminum and magnesium. Illustrations of cross-linking agents include mono-functional monomers, multifunctional monomers, oligomers and other reactive resins, such as acrylates.

Examples of photoinitiators include alpha-hydroxy ketones, such as, Irgacure 184 and Darocure 1173, both of which are manufactured by Ciba Specialty Chemicals™. Further examples of photoinitiators include benzildimethyl-ketal, also known as Irgacure 651, which is manufactured by Ciba Specialty Chemicals™. Additional examples of photoinitiators include phosphine oxides, such as BAPO, manufactured by Ciba Specialty Chemicals™ and Lucerin TPO, manufactured by BASF. Examples of polymerization chain transfer agents include iso-octylmercaptopropionate and alkyl mercaptans. Examples of alkylmercaptans include t-nonyl mercaptan and n-dodecyl mercaptan.

An example of different amounts of the same modifier introduced into the streams 813 and 815 include, for example, 1 % BAPO photoinitiator introduced into stream 813 and 3% BAPO photoinitiator introduced into stream 815. Another example of different amounts of the same modifier introduced into the strams 813 and 815 might be 2% of nanoclay introduced into stream 813 and 6% of nanoclay introduced into stream 815, for example.

In an alternative embodiment of the method, the same amounts of different types of modifiers are introduced into the streams 813 and 815. For example, BAPO photoinitiator having the first weight ratio can be introduced into the stream 813 and Irgacure 184 photoinitiator having the first weight ratio can be introduced into the stream 815. As a second example, nanoclay having the first weight ratio can be introduced in the stream 813 and silica particles having the first weight ratio can be introduced in the stream 815. As a third example, a monofunctional monomer having the first weight ratio can be introduced in the stream 813 and a trifunctional monomer having the first weight ratio can be introduced in the stream 815. In accordance with another alternative example embodiment of the method, different amounts of different types of modifiers can be introduced into the streams 813 and 815. For example, a nanoclay having the first weight ratio can be introduced into the stream 813 and silica having the second weight ratio can be introduced into the stream 815

It should be noted that in the example embodiments of the method and apparatus described above with reference to FIG. 9A can be configured to coat an optical fiber bundle, such as bundle 301 shown in FIGS. 3 and 4. Of course, the process would occur after the individual optical fibers of the bundle have been manufactured and coated. The optical fibers of the bundle preferably would simultaneously pass through the coating applicator 810 and the coating of the present invention would be applied to the bundle in the same way that it is applied to an individual fiber to make the layers 121 and 131 (FIG. 3). Likewise, the applicator 810 could be configured to apply the radially-varying coating of the present invention to an optical fiber ribbon, such as the ribbon 501 shown in FIGS. 5 and 6, for example.

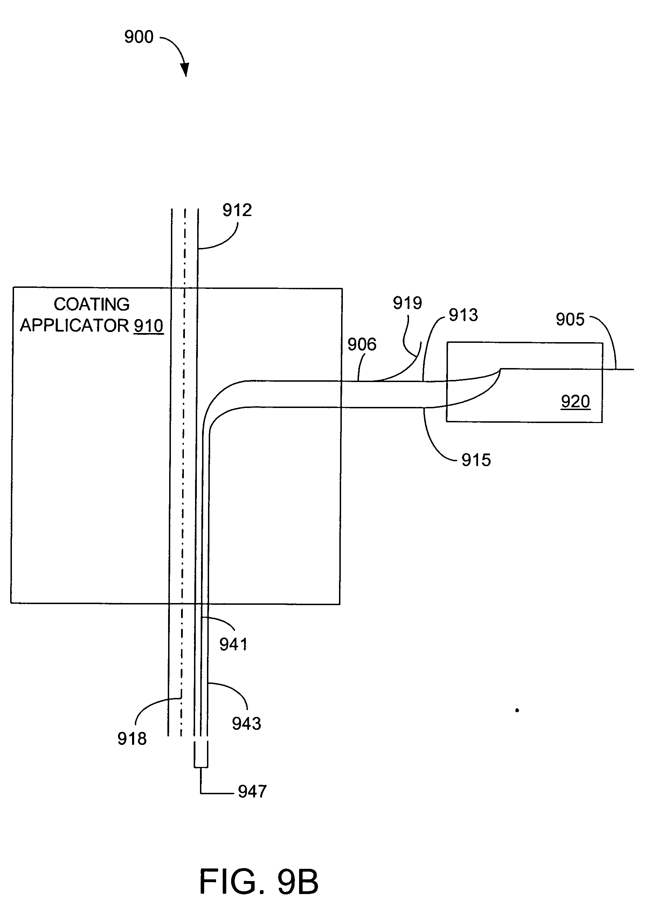

FIG. 9B shows the apparatus 900 of the present invention in accordance with another example embodiment. In accordance with this embodiment, the coating divider 920 divides the coating material 905 into two streams 913 and 915, but the modifier 919 is only introduced into one of the streams 913 or 915 to produce a mixture 906. For example purposes, it will be assumed that the modifier 919 is introduced into stream 913 such that stream 913 becomes a mixture 906. The mixture 906 and the stream 915 are then deposited on the optical fiber 912 when the optical fiber 912 passes through the coating applicator 910 along a longitudinal axis 918 of the optical fiber 912. After some amount of time has passed, the modifier 919 diffuses from the mixture 906 into the stream 915 due to the higher concentration of the modifier in mixture 906 and the lack of the modifier 919 in stream 913. The result is a coating layer 947 that has a radially-varying elastic modulus.

As in the case of the embodiment of FIG. 9A discussed above, the apparatus 900 may be configured to provide an optical fiber bundle or an optical fiber ribbon with a coating layer having a radially-varying elastic modulus.

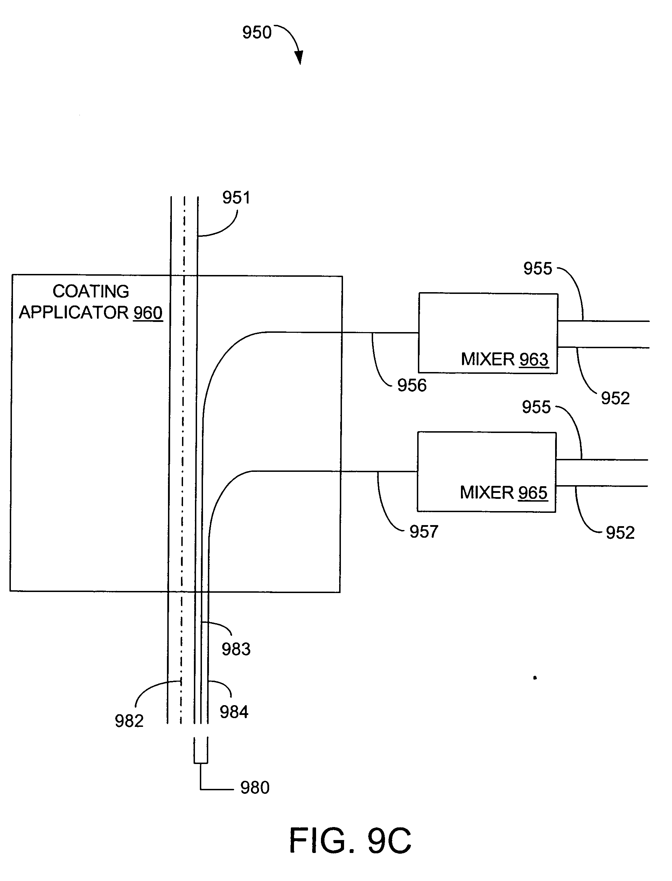

FIG. 9C shows another example embodiment of an apparatus 950 of the present invention for applying a coating to an optical fiber 951 (or an optical fiber bundle or an optical fiber ribbon) in a coating applicator 960 to provide the optical fiber 951 with a coating that has a radially-varying elastic modulus. In accordance with this embodiment, a first amount of a modifier 952 is mixed with the coating material 955 in a first mixer 963 to form a mixture 956 having a first modifier-to-coating material ratio. Similarly, a second amount of the modifier 952 is mixed with the coating material 955 in a second mixer 965 to form a mixture 957 having a second modifier-to-coating material ratio. For example, the modifier 955 and the coating material 952 are mixed in a weight ratio of 1:1 in the mixer 963 to form the mixture 956, and the modifier 955 and the coating material 952 are mixed in a weight ratio 2:1 in the mixer 965 to form the mixture 957. Of course, the present invention is not limited to any particular ratios for the mixtures 956 and 957.

The mixtures 956 and 957 are then deposited on the optical fiber 951 in the coating applicator 960, to create a coating 980 having a radially-varying elastic modulus. The mixtures 956 and 957 are deposited along a longitudinal axis 982 of the optical fiber 951. The mixture 956 is deposited adjacent to the optical fiber 951 to form a first coating layer portion 983 and the mixture 957 is deposited adjacent the layer 983 to form a second coating layer portion 984. The first and second coating layer portions 983 and 984 combine to form the coating layer 980 having a radially-varying elastic modulus.

It should be noted that the embodiments of the method for making the optical fiber having the coating 980 with radially-varying properties can also be used to provide an optical fiber bundle (not shown) and an optical fiber ribbon (not shown) with coatings having a radially-varying elastic modulus. Those skilled in the art will understand, in view of the discussion provided herein, the manner in which the apparatus 950 can be configured to be suitable for applying a coating to an optical fiber bundle or an optical fiber ribbon. It should also be noted that the modifiers 955 added to the coating material 952 need not be the same material. In other words, rather than adding different amounts of the same modifiers to coating layer material 952 in mixers 963 and 965, respectively, different types of modifiers could be mixed with the coating material 952 in each mixer 963 and 965 to create the coating 980 having a radially-varying elastic modulus. It should also noted that in each of the embodiments of FIGS. 9A - 9C, a single applicator is used. This is preferred because the need for additional applicators is eliminated, which can decrease system costs and increase the throughput of the manufacturing line. Those skilled in the art will understand, in view of the present disclosure, the significance of not needing an applicator for each coating layer to be applied. Of course, it is not necessary that a single applicator be used to apply the multiple coating layers. Multiple applicators could be used if desired, but doing so may prevent all of the benefits of the present invention from being realized.

It should be emphasized that the above-described embodiments of the fiber optic communications media and the apparatuses and methods for making the same, particularly, any "preferred" embodiments, are merely examples. Those skilled in the art will understand that many variations and modifications can be made to the above-described embodiments without departing from the scope of the present invention. All such modifications and variations are within the scope of the present invention. For example, the types and/or amounts of modifiers that are used may be varied, the types of cable produced with a radially-varying elastic modulus are virtually unlimited, whether only one or more than one applicator is used.

## Claims

1. An optical fiber cable comprising a core surrounded by a protective sheath,
the core including at least one optical fiber; and
the protective sheath including at least a first coating layer portion and a second coating layer portion, the first and second coating layer portions being comprised of a same coating material, said same coating material of the first coating layer portion having a modifier added thereto, said same coating material of the second coating layer portion having a modifier added thereto, wherein the addition of a modifier to the first coating layer portion and the addition of a modifier to the second coating layer portion cause an elastic modulus of the coating to vary in a radial direction along radii extending outwardly from a center of said core.

2. The optical fiber cable of claim 1, wherein the modifier added to the first coating layer portion is identical to the modifier added to the second coating layer portion, and wherein an amount of the modifier that is added to the first coating layer portion is different from an amount of the modifier that is added to the second coating layer portion.

3. The optical fiber cable of claim 2, wherein the first modifier is one of a filler, a cross-linking agent, a polymerization chain transfer agent, a photoinitiator and any combination thereof, and wherein the second modifier is one of a filler, a cross-linking agent, a polymerization chain transfer agent, a photoinitiator and any combination thereof.

4. The optical fiber cable of claim 1, wherein the modifier added to the first coating layer portion is different than the modifier added to the second coating layer portion.

5. The optical fiber cable of claim 1, wherein the elastic modulus of the coating varies in said radial direction in a gradual manner.

6. A method of fabricating an optical fiber cable comprising a core surrounded by a protective sheath, the method comprising:
forming the core from one or more longitudinally extending optical fibers; and
forming the protective sheath by applying a coating to the core, the coating comprising at least a first coating layer portion and a second coating layer portion, the first and second coating layer portions being comprised of a same coating material, said same coating material of the first coating layer portion having a modifier added thereto, said same coating material of the second coating layer portion having a modifier added thereto, wherein the addition of a modifier to the first coating layer portion and the addition of a modifier to the second coating layer portion cause an elastic modulus of the coating to vary in a radial direction along radii extending outwardly from a center of said core.

7. The method of claim 6, wherein the modifier added to the first coating layer portion is identical to the modifier added to the second coating layer portion, and wherein an amount of the modifier that is added to the first coating layer portion is different from an amount of the modifier that is added to the second coating layer portion.

8. The method of claim 6, wherein the first modifier is one of a filler, a cross-linking agent, a polymerization chain transfer agent, a photoinitiator and any combination thereof, and wherein the second modifier is one of a filler, a cross-linking agent, a polymerization chain transfer agent, a photoinitiator and any combination thereof.

9. The method of claim 6, wherein the modifier added to the first coating layer portion is different to the modifier added to the second coating layer portion.

10. The method of claim 6, wherein the elastic modulus of the coating varies in said radial direction in a gradual manner.
